# EUROPEAN PATENT APPLICATION

(11) **EP 2 713 289 A2**
(43) Date of publication of application: **02.04.2014**
(21) Application number: 13306329.7
(22) Date of filing: 27.09.2013
(51) Int. Cl.: G06F 17/30

(54) **Pseudo-lifecasting**

(30) Priority: 28.09.2012 US 201261707577 P
(71) Applicant: Orange, 75015 Paris (FR)
(72) Inventor: Odessky, Adam, SAN FRANCISCO, CA California CA 94122 (US)

(57) **Abstract**

A system and associated method are provided for generating a video associated with an environment of a user device, comprising: receiving information about a position of the user device over a wireless communication link; combining, using a processor, image information from a database stored in a memory that did not originate from the user device with the information about the position of the user device; and providing an image or video based on the combined image information.

## Description

### BACKGROUND

Many people in the world are eager to share information about themselves including details of their lives, where they are located, daily activities, and how they feel. The ability to provide this information to the world-at-large in real time is called "lifecasting"-i.e., a form of broadcasting information about one's life experiences.

However, the promise of real time video and sensory lifecasting is difficult to achieve because real-time voice and video is bandwidth constrained, particularly on mobile networks. In addition to costs associated with such large volume of data transfers, the amount of energy required by mobile devices when performing such transfers is significant, and would result in a substantial reduction in battery life when such lifecasting is taking place.

### SUMMARY

Given the bandwidth constraints noted above, it is still possible for an individual to convey some level of information in real time, and still impart information to others about their surroundings to others, with a significantly lower data volume than would be required to transmit live video and audio data.

According to various embodiments of the invention, basic information about an individual's environment can be collected and transmitted to a server. This basic information can then be paired up with additional data at the server, and this combined data can then be presented to consumers so that a much richer image of the individual's experiences can be communicated.

A primary piece of information that can be collected from an individual and transmitted to a server with low bandwidth is the location of the individual. However, it is possible to provide the individual with other forms of sensors that can measure attributes of the individual's surroundings and convert the data sensed from the surroundings into a digital form that can be transmitted with a relatively low bandwidth.

Once the information is communicated to a server, the server can match the data stream (that has preferably been time-stamped) information up with a much richer data context.

Although the matched/combined data that can be sent to viewers (subscribers) are not receiving a true "lifecast", the pseudo-lifecast can still provide a general feel of a person's sensory view without transmitting the bandwidth intensive video information.

Provided herein is a system and associated method for generating a video associated with an environment of a user device, comprising: receiving information about a position of the user device over a wireless communication link; combining, using a processor, image information from a database stored in a memory that did not originate from the user device with the information about the position of the user device; and providing an image or video based on the combined image information.

### DRAWINGS

The following figures illustrate exemplary embodiments of the invention:
- Figure 1: is a block diagram illustrating the primary components of an exemplary embodiment of a system;
- Figure 2: is a flowchart illustrating an exemplary embodiment of a method; and
- Figure 3: is a pictorial illustration of a possible path taken by a modile device.

### DETAILED DESCRIPTION

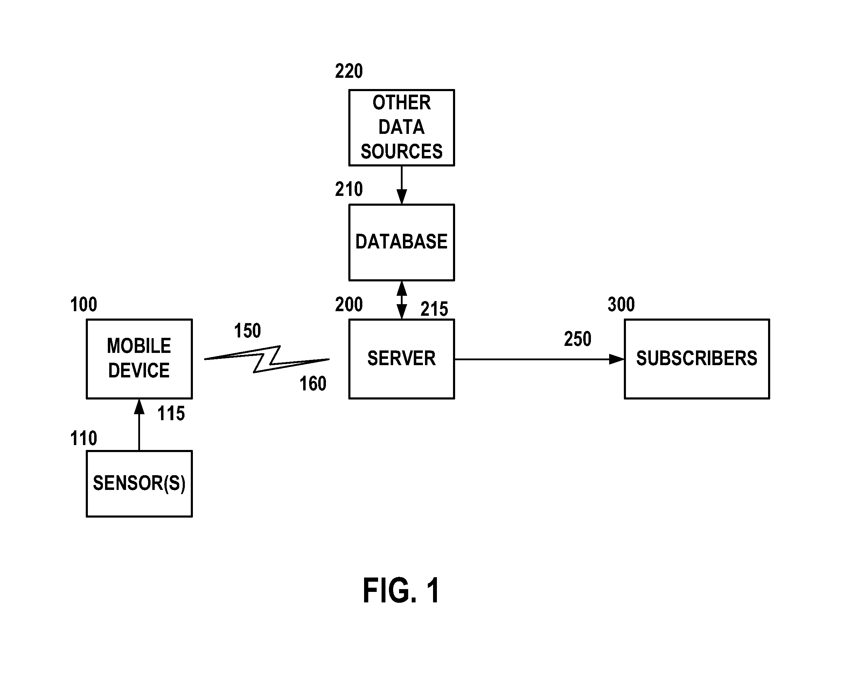

Figure 1 is a block diagram illustrating the basic components of the pseudo-lifecasting system. A mobile device 100 of the lifecasting individual comprises a wireless data transceiver, one or more sensors 110, and software algorithms that can translate / convert the raw information received from the sensor(s) 115 into meaningful data 160 that can be transmitted from the mobile device. An exemplary primary sensor 110 would be a GPS that can accurately measure a location of the mobile device and allow transmission of GPS coordinates 160 by the mobile device 100. Other types of sensors 110 could easily be incorporated as well, such as a thermometer or other weather sensing device (humidity sensor, wind speed device, etc.), a volume level measurement device, e.g., in the form of a microphone, light meter, chemical detectors, etc.

The mobile device 100 transmits its data 160 to a server 200 that has established an identified wireless connection 150 with the mobile device. This connection 150 could be based on a telephone number, a device identifier, or other form of mobile device identification information. The mobile device 100 transmits the sensed 115 and converted 160 information to the server 200 at certain points in time. These points in time could be predefined periodic points in time, e.g., once every thirty seconds, once every five minutes, etc. Alternately, or additionally, the data could be buffered on the mobile device 100 and then either pushed to the server 200 by the user of the mobile device 100, or pulled by the server 200 at times determined by the user of the mobile device 100 or a server 200 operation. Such a scheme could be useful when the communication link 150 is temporarily disrupted.

The server 200 has access to a database 210 of external information that can be associated with the data 160 received from the mobile device 100. This database 210 may be information originating from the server 200 itself, or it may be information obtained from other sources 220. The server 200 has access to software algorithms that are able to associate the data 160 received from the mobile device with the data received from the database 215, combine the information together, and provide the combined data 250 to others, such as subscribers 300 to a user of the mobile device 100, or to an accessible information page, such as a web page associated with the mobile device 100.

By way of example, a mobile device 100 that utilizes a GPS unit as its sensor 110 transmits coordinate information 160 to the server 200. The server 200 then accesses Google Maps^{®} and obtains street view information 215 associated with the coordinates of the mobile device 100. This information is combined together 250 and presented to subscribers 300. The subscribers could then obtain the street view information stored within Google Maps^{®} that corresponds to the present location of the mobile device 100. Although the information presented to the subscribers 300 is not completely up-to-date live information, as would be the case with an actual real-time video lifecast (since the street view information could be months or even years old), the information is rich enough so that it can give the subscribers 300 a good sense of what the user of the mobile device 100 is experiencing at any given time. Note that the street view could also be any kind of an environmental view around a location.

Advantageously, the large volumes of data that are required are handled on the server 200 side, thereby freeing the mobile device 100 from having to transmit these large volumes.

More than one piece of information can be combined in producing the experience. For example, in the example presented above, a time of day could be associated with the GPS coordinates, and, if available, a decision could be made about presenting a day shot, evening shot, or night shot of the associated location. Similarly, if a thermometer were used as a sensor 110, a decision could be made about presenting a winter or a summer scene.

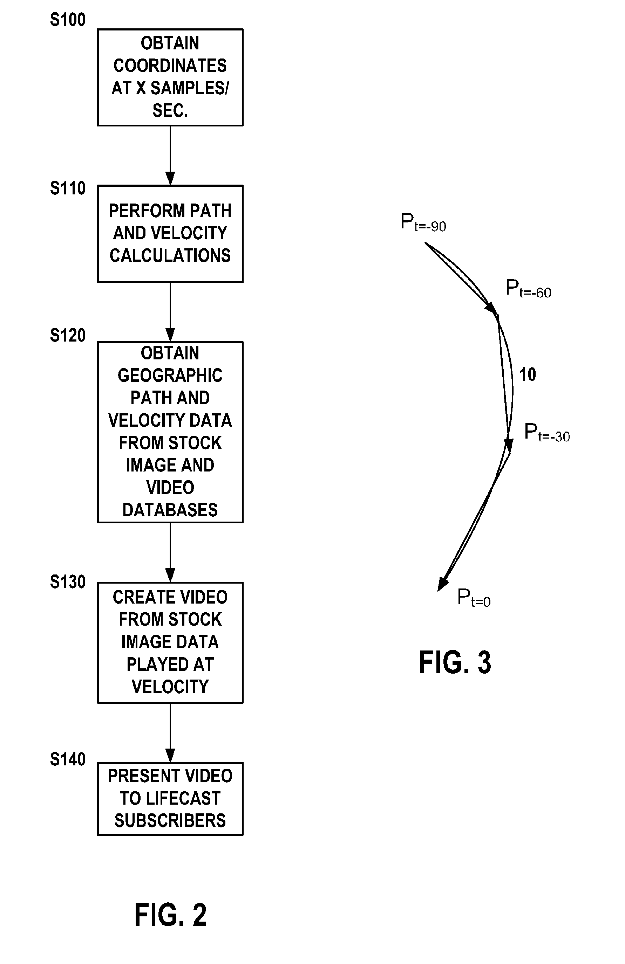

In addition to providing mere static images to subscribers 300, however, a video can be constructed that replicates not only position, but an actual travel experience to the subscribers. Figure 2 is a flowchart that illustrates one embodiment for doing so. First, the mobile device's 100 coordinates are obtained at a predefined number X of samples per second S100. The information 160 is transmitted to the server 200 which can perform path and velocity calculations S110. The velocity calculations can be performed using vector-based kinematic equations and looking at each pair of two adjacent position samples and their respective times. Even though the time can vary between samples, the use of Δd / Δt can ensure an accurate calculation of average velocity (and further derivations of acceleration and other variables associated with motion) during the sample period, and a way of estimating an instantaneous velocity at any particular point.

The server 200 obtains image information associated with the received position information from the database 210 in the form of pictures and/or videos S120. The information can be combined to create a video from the stock image data played at velocity S130. The video can be presented to the life cast subscribers 300 S140.

When only still image data is available, the video could be created in a variety of ways. For example, the stills could be statically displayed at periodic intervals with appropriate transitions (cross-fading or other known techniques) between them. Alternately, some form of zooming into the existing images could be performed to partially replicate traveling at velocity (although a pure zooming does not accurately reflect one's experience in moving at a particular velocity). Where three-dimensional information is available, much more sophisticated manipulations about a scene image can be performed, creating a more realistic perspective than mere zooming. For example, nearby portions of the scene can be moved in the video more quickly that farther portions, and the movements can be performed in a spatially correct manner.

When actual video information is available (either a single video or a series of videos joined together), it can be transitioned into the final video 250 provided to the subscribers, but the video rate presented to the subscribers 300 can be adjusted to more accurately reflect the velocity of the mobile device 100. Video could also be produced from a series of still images using techniques known to animators. Thus the final video 250 produced could replicate the user's velocity (and acceleration, as velocity changes over time, taking into account a set of velocities established for respective pairs of position points) accurately. Additionally, the video could be further processed to include aspects like colored screens and filters that accentuate a certain aspect or mood. For example, a reddish hue could be added if the temperature is high or if the noise exceeds a certain level. Blurring or noise could be introduced to simulate dust, etc.

Referring to Figure 3, in a preferred embodiment, there is a small lag between the mobile device's 100 actual location and that presented to the subscribers 300. This is because at the device's current position at the latest time Pₜ₌₀, one cannot know the full velocity information (speed and direction). However, accurate information can be obtained using past information. In an example, position information is provided every thirty seconds. By combining position information taken thirty Pₜ₌₋₃₀, sixty Pₜ₌₋₆₀, and 90 Pₜ₌₋₉₀ seconds ago, accurate velocity (speed and direction) information can be obtained at least for Pₜ₌₋₃₀ and Pₜ₌₋₆₀. Thus, the video displayed to subscribers could be delayed by thirty seconds to more accurately present video reflecting the mobile device's 100 true velocity. Additionally, a more accurate actual path 10 could be interpolated from the samples. Thus, by using a small "look behind" buffer, more accurate information can be provided to the subscribers 300 with a minimal delay.

The above examples illustrate the use of position information and a use of Google Maps^{®} street view, however, the information provided could be used to display information related to commercial establishments (e.g., a user going into a nightclub creating inside photographs of the nightclub, or even a particular department within a department store)-thus, a commercial entity could take advantage of such a system by providing high quality image data (including high resolution 3-D model information) about its business. It could also be extended to amusement park rides, museums (particularly art museums, where one could be taking a virtual tour along with the viewer, traveling on a vehicle, such as a car, train, airplane, etc. to simulate looking out of the window of the viewer.

The system or systems described herein may be implemented on any form of computer or computers and the components may be implemented as dedicated applications or in client-server architectures, including a web-based architecture, and can include functional programs, codes, and code segments. Any of the computers may comprise a processor, a memory for storing program data and executing it, a permanent storage such as a disk drive, a communications port for handling communications with external devices, and user interface devices, including a display, keyboard, mouse, etc. When software modules are involved, these software modules may be stored as program instructions or computer readable codes executable on the processor on a computer-readable media such as read-only memory (ROM), random-access memory (RAM), CD-ROMs, magnetic tapes, floppy disks, and optical data storage devices. The computer readable recording medium can also be distributed over network coupled computer systems so that the computer readable code is stored and executed in a distributed fashion. This media is readable by the computer, stored in the memory, and executed by the processor.

All references, including publications, patent applications, and patents, cited herein are hereby incorporated by reference to the same extent as if each reference were individually and specifically indicated as incorporated by reference and were set forth in its entirety herein.

For the purposes of promoting an understanding of the principles of the invention, reference has been made to the preferred embodiments illustrated in the drawings, and specific language has been used to describe these embodiments. However, no limitation of the scope of the invention is intended by this specific language, and the invention should be construed to encompass all embodiments that would normally occur to one of ordinary skill in the art.

The embodiments herein may be described in terms of functional block components and various processing steps. Such functional blocks may be realized by any number of hardware and/or software components that perform the specified functions. For example, the described embodiments may employ various integrated circuit components, e.g., memory elements, processing elements, logic elements, look-up tables, and the like, which may carry out a variety of functions under the control of one or more microprocessors or other control devices. Similarly, where the elements of the described embodiments are implemented using software programming or software elements the invention may be implemented with any programming or scripting language such as C, C++, Java, assembler, or the like, with the various algorithms being implemented with any combination of data structures, objects, processes, routines or other programming elements. Functional aspects may be implemented in algorithms that execute on one or more processors. Furthermore, the embodiments of the invention could employ any number of conventional techniques for electronics configuration, signal processing and/or control, data processing and the like. The words "mechanism" and "element" are used broadly and are not limited to mechanical or physical embodiments, but can include software routines in conjunction with processors, etc.

The particular implementations shown and described herein are illustrative examples of the invention and are not intended to otherwise limit the scope of the invention in any way. For the sake of brevity, conventional electronics, control systems, software development and other functional aspects of the systems (and components of the individual operating components of the systems) may not be described in detail. Furthermore, the connecting lines, or connectors shown in the various figures presented are intended to represent exemplary functional relationships and/or physical or logical couplings between the various elements. It should be noted that many alternative or additional functional relationships, physical connections or logical connections may be present in a practical device. Moreover, no item or component is essential to the practice of the invention unless the element is specifically described as "essential" or "critical".

The use of "including," "comprising," or "having" and variations thereof herein is meant to encompass the items listed thereafter and equivalents thereof as well as additional items. Unless specified or limited otherwise, the terms "mounted," "connected," "supported," and "coupled" and variations thereof are used broadly and encompass both direct and indirect mountings, connections, supports, and couplings. Further, "connected" and "coupled" are not restricted to physical or mechanical connections or couplings. Expressions such as "at least one of," when preceding a list of elements, modify the entire list of elements and do not modify the individual elements of the list.

The use of the terms "a" and "an" and "the" and similar referents in the context of describing the invention (especially in the context of the following claims) should be construed to cover both the singular and the plural. Furthermore, recitation of ranges of values herein are merely intended to serve as a shorthand method of referring individually to each separate value falling within the range, unless otherwise indicated herein, and each separate value is incorporated into the specification as if it were individually recited herein.
Finally, the steps of all methods described herein are performable in any suitable order unless otherwise indicated herein or otherwise clearly contradicted by context. The use of any and all examples, or exemplary language (e.g., "such as") provided herein, is intended merely to better illuminate the invention and does not pose a limitation on the scope of the invention unless otherwise claimed. Numerous modifications and adaptations will be readily apparent to those skilled in this art without departing from the spirit and scope of the invention.

### TABLE OF REFERENCE CHARACTERS

- 10: interpolated path
- 100: mobile device
- 110: sensors
- 115: sensor data
- 150: wireless communications link / connection
- 160: mobile device data
- 200: server
- 210: database
- 215: database data
- 250: combined data
- 220: other data sources
- 300: subscribers

## Claims

1. A method for generating a video associated with an environment of a user device, comprising:
receiving information about a position of the user device over a wireless communication link;
combining, using a processor, image information from a database stored in a memory that did not originate from the user device with the information about the position of the user device; and
providing an image or video based on the combined image information.

2. The method of claim 1, further comprising:
determining velocity information from at least two received information points; and
providing a video in which the combined image information replicates the determined velocity information.

3. The method of one of the previous claims, further comprising:
subscribing, by a plurality of viewers, to an image or video stream comprising the provided image or video.

4. The method of one of the previous claims, further comprising:
associating time stamp information with the information of each of the received positions.

5. The method of one of the previous claims, further comprising:
setting a predetermined time interval for receiving the position information.

6. The method of the previous claims, wherein the image information is an environmental view around a location.

7. The method of claim 1, wherein the provided image or video is delayed by at least one sample time of the received position information.

8. The method of the previous claims, wherein at least two different types of information are utilized to obtain information from the database.

9. The method of claim 8, further comprising making a selection from a plurality of images associated with the position of the user device based on a second type of information.

10. The method of claim 9, wherein the second type of information is time-of-day information.

11. The method of claim 9, wherein the second type of information is time-of-year information.

12. The method of the previous claims, wherein the providing of the image or video comprises:
stitching together a plurality of source videos or images to form a final video.

13. The method of the previous claims, wherein the database image information comprises three-dimensional information.

14. A system for generating a video associated with an environment of a user device, comprising:
a processor;
a wireless communication link over which the processor receives information about a position of the user device;
a database comprising information that did not originate from the user device;
a combining routine that combines the image information from the database with the information about the position of the user device; and
an image output routine that provides an image or video based on the combined image information.

15. A non-transitory computer program product, comprising a computer usable medium having a computer readable program code embodied therein, said computer readable program code adapted to be executed to implement the method of one of the claims 1 to 13.
